# EUROPÄISCHE PATENTSCHRIFT

(11) **EP 1 359 693 B1**
(45) Veröffentlichungstag und Bekanntmachung des Hinweises auf die Patenterteilung: **12.12.2007**
(21) Anmeldenummer: 03100875.8
(22) Anmeldetag: 02.04.2003
(51) Int. Cl.: H04J 14/02

(54) **Verfahren zum Schützen von Datensignalen, die über Lichtwellenleiter übertragen werden**
Method for protecting data signals that are transmitted over optical fibers
Procédé de protection de signaux de données transmis sur des fibres optiques

(30) Priorität: 30.04.2002 US 136257
(43) Veröffentlichungstag der Anmeldung: 05.11.2003
(73) Patentinhaber: NOKIA SIEMENS NETWORKS GMBH & CO. KG, 81541 München (DE)
(72) Erfinder: Heiles, Jürgen, 81371 München (DE); Jäger, Hubert, Dr., 82049 Pullach (DE); Jahreis, Oliver, 80687 München (DE); Mittermaier, Alfons, 12161 Berlin (DE)

(56) Entgegenhaltungen:
- EP-A- 0 483 790
- EP-A- 0 969 619
- WO-A-01/05083
- DE-A1- 4 433 031

## Beschreibung

Die Erfindung betrifft ein Verfahren nach dem Oberbegriff des Anspruchs 1.

Optische Datensignale niederer Bitrate werden zu optischen Datensignalen höherer Bitrate gemultiplext und über optische Datennetze übertragen.

Diese optischen Datennetze enthalten unterschiedliche optische Verstärker und Schalteinrichtungen.

Um Streckenabschnitte optischer Datennetze vor Ausfällen zu schützen werden parallel zu den Betriebs-Lichtwellenleitern, auch Working Line genannt, Ersatz-Lichtwellenleiter, auch Protection Line genannt, verlegt.

Diese disjunkten Lichtwellenleiter bzw. Strecken schützen die Betriebsdatensignale. Bei Vorhandensein von mehr als zwei disjunkten Wegen ist es ökonomisch vorteilhaft, wenn sich n Betriebsdatensignale den Ersatzweg teilen. Dadurch wird verhindert, dass 50% der Gesamttransportkapazität für Ersatzschaltungen vorgehalten wird. Durch die 1:n Ersatzschaltung muss nur 1/(n+1)-tel der Transportkapazität für Ersatzschaltungen reserviert werden.

Schutzschaltungen, auch Protection genannt, für optische Übertragungssysteme sind aus der Synchronen Digital Hierarchie, kurz SDH, oder dem Synchronen Optischen Netzwerk, kurz SONET, bekannt. Eine bekannte Schutzschaltung ist die 1:n oder für den Fall n=1, die 1:1 Ersatzschaltung. Dabei werden n optische Leitungen durch eine Ersatzleitung geschützt. Auf der Ersatzleitung können im fehlerfreien Zustand zusätzliche Daten übertragen werden, die im Fehlerfall nicht mehr übertragen werden. Für den Fall zusätzlich auf der Ersatzleitung übertragener Daten werden diese auch als Low-Priority-Traffic bezeichnet.

In der SDH-Technik wurde dafür ein 1:n Ersatzschalteverfahren standardisiert, die sogenannte 1:n Multiplex-Section-Protection gemäß ITU-T G.783.
■Zur eindeutigen Fehlerlokalisierung wird bei SDH die sogenannte Multiplex-Section verwendet. Diese bildet einen Multiplex-Section-Overhead über das Betriebsdatensignal und erstreckt sich genau über den Abschnitt der Ersatzschaltung. Das heißt, dass der Multiplex-Section-Overhead auf der Sendeseite erzeugt und auf der Empfangsseite terminiert wird, bzw. genau andersherum in der Gegenrichtung. Betriebsdatensignalstörungen ausserhalb des Ersatzschaltesystems haben somit keine Auswirkung auf den Multiplex-Section-Overhead. Wird z.B. auf der Empfangsseite eine Störung der Multiplex-Section festgestellt, so liegt die Ursache der Störung eindeutig auf dem Abschnitt der Multiplex-Section, und nicht davor. Das gleiche Überwachungsprinzip gilt auch für den Ersatzweg.
**■** Der Multiplex-Section-Overhead, welcher mit dem Nutzdatensignal übertragen wird, stellt einen schnellen Kommunikationskanal zur Koordinierung der Ersatzschaltung zur Verfügung. Darüber wird gewährleistet, dass bei Störungen in nur einer Richtung dennoch beide Enden ersatzschalten, dass beim Auftreten von Mehrfachfehlern gemäß einem Prioritätenschema beide Enden das selbe Betriebsdatensignal ersatzschalten, und dass nach der Fehlerbehebung die beiden Enden quasi-synchron zurückschalten.

Zur Steuerung dieser 1:n Ersatzschaltung wird üblicherweise ein Automatic Protection Switching Protokoll, kurz APS genannt, verwendet. Dieses Protokoll wird in Overhead Bytes der optischen Datensignale, beispielsweise dem genannten Multiplex-Section-Overhead oder mit Hilfe zusätzlicher optischer Kanäle, wie beispielsweise Optical Supervisory Channel, kurz OSC, übertragen und am Anfangs- und Endpunkt der Übertragung ausgewertet. Nach Auswertung der Protokolldaten ist dann gegebenenfalls eine Schutzschaltung möglich.

Auf der Basis der Dichten-Wellenlängenmultiplextechnik, kurz DWDM (Dense Wavelength Division Multiplex), bieten DWDM-Netzbetreiber den SDH- oder SONET-Netzbetreibern transparente Verbindungen an. Die Transparenz bezieht sich dabei auf die SDH- bzw. SONET-Signale, d.h. auf Payload und Overhead, also inklusive Multiplex-Section-Overhead. Der DWDM-Netzbetreiber kann zwar den Multiplex-Section-Overhead lesen und damit die Signalqualität überwachen. Er ist aber aufgrund des Geschäftsmodells nicht befugt, den Multiplex-Section-Overhead zu modifizieren oder gar zu terminieren. Für den SDH-Netzbetreiber hat das den Vorteil, dass er den Multiplex-Section-Overhead zur Kommunikation zwischen seinen Netzsegmenten über das DWDM-Netz hinweg nutzen kann.

Für die 1:n Ersatzschaltung hat das folgende Auswirkungen:
**■** Die Multiplex-Section erstreckt sich nicht mehr nur über den Abschnitt zwischen zwei ersatzschaltenden (DWDM-Netzbetreiber) Geräten. Sie liefert zwar noch ein Kriterium für den Ausfall eines Betriebsdatensignals. Die Fehlerursache kann aber nicht mehr lokalisiert werden.
**■** Weil der Multiplex-Section-Overhead vom DWDM-Netzbetreiber nicht mehr verwendet werden kann, steht kein Kommunikationskanal zur Koordination der 1:n Ersatzschaltung zur Verfügung.

Im gezeigten Fall steht nun kein optischer Zusatzkanal zur Verfügung bzw. es kann nicht auf Overhead Bytes des optischen Datensignals zugegriffen werden, wie dies auch bei der Übertragung von Daten über Netze mit Geräten von verschiedenen Herstellern oder fremdverwalteten Netzen auftreten kann. Es besteht das Problem, das keine Schutzschaltung mit Hilfe dieser APS Protokolle durchgeführt werden kann

Ein System mit 1:n Ersatzschaltung ist aus EP-A-0 483 790 bereits bekannt. DE-A-4 433 031 offenbart ein 1:1 System bei dem falls keine Daten empfangen werden, automatisch auf eine optische Ersatzdatenübertragungsleitung umgeschaltet wird.

Die der Erfindung zugrunde liegende Aufgabe besteht nun darin, eine 1:n Schutzschaltung für optische Lichtwellenleiterübertragungsstrecken ohne Verwendung eines Protokolls zu verwirklichen.

Diese Aufgabe wird durch die im Patentanspruch 1 aufgeführten Verfahrensmerkmale gelöst.

Die mit der Erfindung erzielten Vorteile bestehen insbesondere darin, dass eine Schutzschaltung von mindestens zwei Betriebslichtwellenleiterpaaren oder bidirektional genutzten Betriebslichtwellenleiter (Working Line) durch mindestens einen Ersatzlichtwellenleiterpaar oder bidirektional genutzten Ersatzlichtwellenleiter (Protection Line) ohne Verwendung eines Kommunikations- oder Hilfsprotokolls möglich ist.

Vorteilhafte Ausgestaltungen der Erfindung sind in den Unteransprüchen angegeben.

Im Beispiel darf nur dann ersatzgeschaltet werden, wenn die Fehlerursache innerhalb des zu schützenden Systems liegt, d.h. zwischen zwei DWDM-Geräten. Würde auch dann ersatzgeschaltet, wenn die Ursache der Störung des Betriebsdatensignals ausserhalb des Ersatzschaltesystems liegt, dann würde die Ersatzschaltung zum einen keine Verbesserung für das gestörte Betriebsdatensignal bringen, und zum anderen stände der Ersatzweg nicht mehr zum Schutz der anderen Betriebsdatensignale zur Verfügung. Das heißt, dass das 1:n Ersatzschaltesystem die Fehlerursache dahingehend lokalisieren können muss, dass es feststellen kann, ob die Fehlerursache innerhalb oder außerhalb des Ersatzschaltesystems liegt.

Bei Mehrfachfehlern darf es nicht vorkommen, dass ein erstes Betriebsdatensignal fälschlicherweise längerfristig mit einem zweiten Betriebsdatensignal verschaltet wird. Es ist somit eine Koordination der Ersatzschalteaktivitäten zwischen den beiden Enden erforderlich.
Nach der Behebung der Betriebsdatensignalstörung müssen die Schutzschalteinrichtungen quasi-synchron auf den Betriebsweg zurückschalten.

Bei Fehlern in nur einer Richtung sollen trotzdem beide Richtungen ersatzgeschaltet werden, da bei Reparaturarbeiten meistens beide Richtungen, zumindest temporär, getrennt werden.

Ein Ausführungsbeispiel ist in der Zeichnung dargestellt und wird im folgenden beschrieben. Dabei zeigen:
Figur 1 ein Blockschaltbild einer erfindungsgemäßen Anordnung
Figur 2 das Blockschaltbild nach Figur 1 bei Auftreten eines Fehlers und einem ersten Schaltzustand
Figur 3 das Blockschaltbild nach Figur 2 bei Auftreten eines Fehlers und vollständiger Umschaltung auf die Ersatzleitung

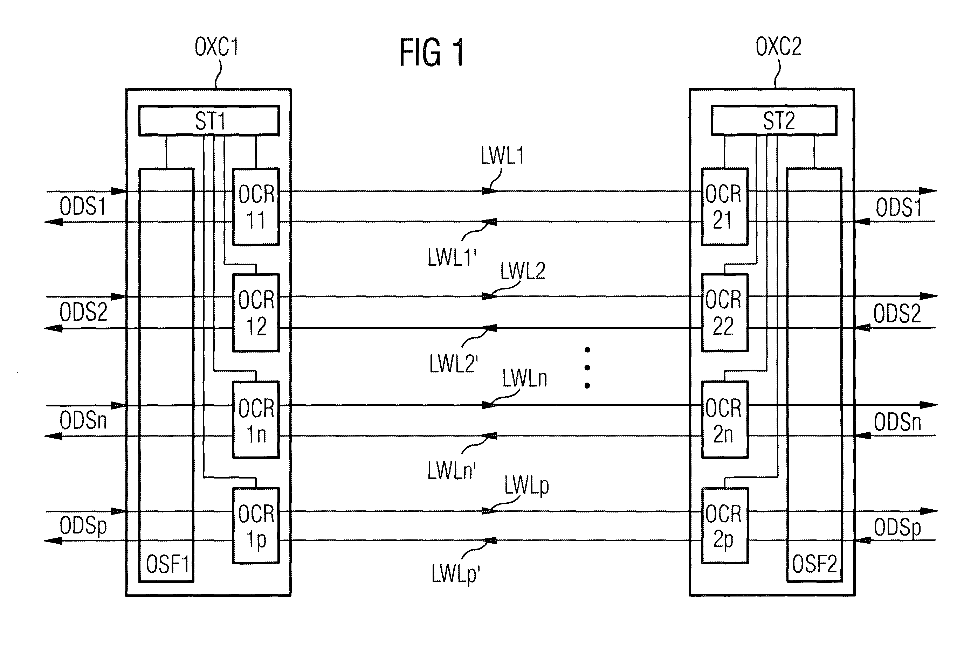

Figur 1 zeigt den prinzipiellen Aufbau einer erfindungsgemäßen Anordnung für ein optisches Datennetz, bestehend aus paarweise angeordneten Lichtwellenleitern LWL1, ..., LWLn, LWLp, LWL1', ..., LWLn', LWLp' mit an beiden Enden vorgesehenen optischen Schalteinrichtungen OXC1, OXC2, die jeweils ein optisches Schaltfeld OSF1, OSF2, je eine Steuereinrichtung ST1, ST2 sowie jeweils einem Lichtwellenleiterpaar zugeordnete Überwachungseinrichtungen OCR11, ..., OCR1n, OCR1p, OCR21, ..., OCR2n, OCR2p aufweisen. Die Lichtwellenleiterpaare LWL1, LWL1'.....LWLn, LWLn' bilden die Betriebslichtwellenleiter bzw. Working Line zur bidirektionalen Übertragung der optischen Datensignale ODS1, ODS2, ..., ODSn, während das Lichtwellenleiterpaar LWLp, LWLp' als Ersatzlichtwellenleiter bzw. Protection Line für den Fall dient, dass auf einer der Betriebslichtwellenleiter eine Störung auftritt. Für einen solchen Störungsfall ist vorgesehen, dass der betroffene Betriebslichtwellenleiter an beiden Enden abgeschaltet und die Datenübertragung nach erfolgter Umschaltung über die Ersatzleitung stattfindet.

Jedes Lichtwellenleiterpaar bildet einen Übertragungskanal für ein optisches Datensignal, wobei jeweils der eine Lichtwellenleiter pro Lichtwellenleiterpaar für die Übertragung der Datensignale in die eine Richtung und der andere für die Übertragung in die entgegengesetzte Richtung vorgesehen ist.

Längs der Lichtwellenleiter können nicht dargestellte Regeneratoren, Verstärker, Multiplexer, Schaltelemente oder andere optische Vorrichtungen vorgesehen werden.

An die Stelle je eines Lichtwellenleiterpaares kann auch ein Einzel-Lichtwellenleiter zur bidirektionalen Übertragung der optischen Datensignale treten.

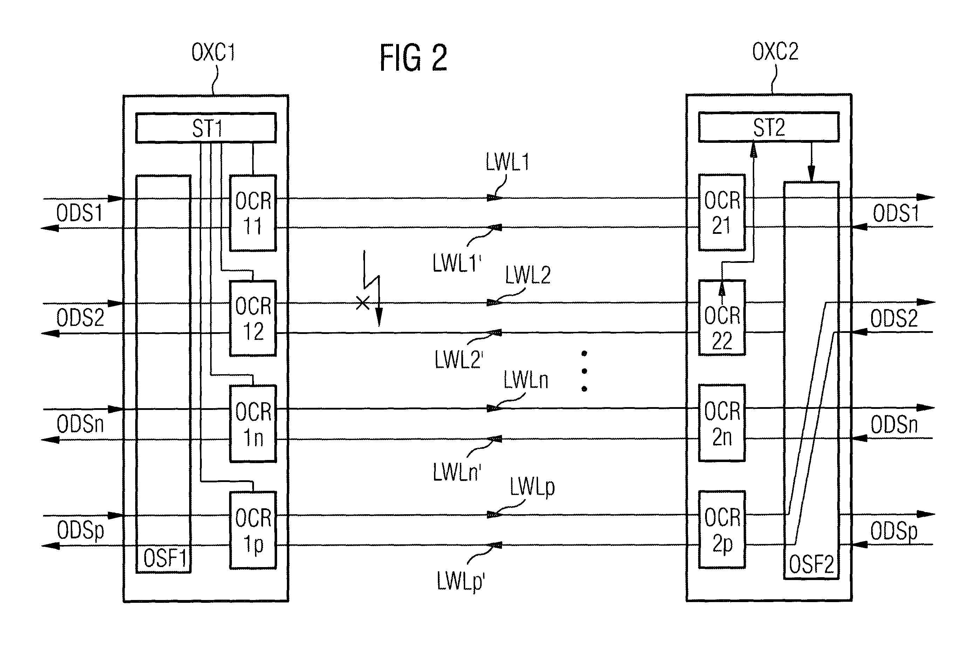

Figur 2 zeigt die Anordnung nach Figur 1 mit der Maßgabe, dass in einer der Betriebslichtwellenleiter eine Störung aufgetreten ist, weil beispielsweise der Lichtwellenleiter LWL2 unterbrochen worden ist. In Senderichtung wird deshalb von jeder empfangenden optischen Schalteinrichtung kein optisches Signal detektiert. Im gezeigten Fall ist die Richtung von OXC1 nach OXC2 unterbrochen. Das heißt, dass zunächst nur die optische Schalteinrichtung OXC2 kein Signal empfängt. Dies wird in der zugeordneten Überwachungseinrichtung OCR22 als Signalausfall, genannt Loss of Light, kurz LOL, bzw. Alarm Indication Signal, kurz AIS, erkannt. Diese gibt daraufhin ein Signal an die Steuereinrichtung ST2 ab. Die Steuereinrichtung ST2 wertet dieses Signal aus und gibt einen Schaltbefehl an das optische Schaltfeld OSF2 ab. Das optische Schaltfeld OSF2 wertet diesen Befehl aus und führt eine bidirektionale Umschaltung des optischen Datensignals ODS2 vom Betriebslichtwellenleiterpaar LWL2/LWL2' auf das Ersatzlichtwellenleiterpaar LWLp/LWLp' durch. Es wird eine bidirektionale Umschaltung durchgeführt, obwohl die Übertragung in der Gegenrichtung nicht gestört ist.

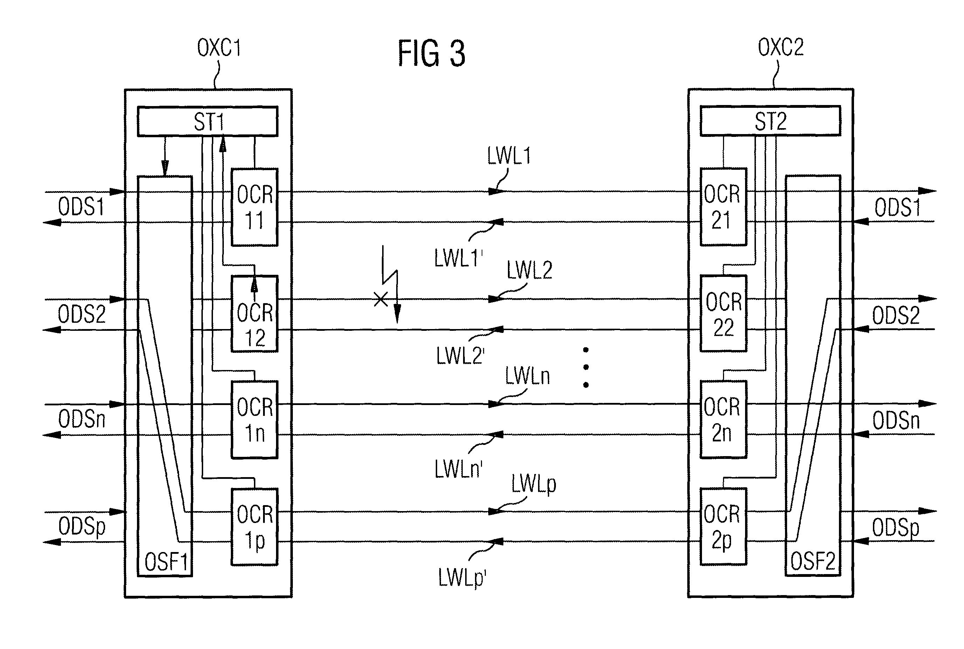

Bedingt durch die bidirektionale Umschaltung in der optischen Schalteinrichtung OXC2 wird auf dem an sich nicht gestörten Lichtwellenleiter LWL2' kein Signal ausgesendet. Die optische Schalteinrichtung OXC1 empfängt daraufhin kein Signal. Dies wird in der zugeordneten Überwachungseinrichtung OCR12 als Signalausfall LOL bzw. AIS erkannt. Diese gibt daraufhin ein Signal an die Steuereinrichtung ST1 ab. Die Steuereinrichtung ST1 wertet dieses Signal aus und gibt einen Schaltbefehl an das optische Schaltfeld OSF1 ab. Das optische Schaltfeld OSF1 wertet diesen Befehl aus und führt eine bidirektionale Umschaltung des optischen Datensignals ODS2 vom Betriebslichtwellenleiterpaar LWL2/LWL2' auf das Ersatzlichtwellenleiterpaar LWLp/LWLp' durch.
Dieser Schaltzustand ist in Figur 3 dargestellt.
Damit ist eine Ersatzschaltung des optischen Datensignals für eine Leitungsunterbrechung eines Lichtwellenleiters durchgeführt (1:n Ersatzschaltung).

Für den Fall, dass ein optisches Zusatzdatensignal auf dem Ersatzlichtwellenleiterpaar LWLp/LWLp' im störfreien Fall übertragen wurde, wird durch die Ersatzschaltung dies nicht mehr übertragen (Low Priority Traffic).

Nachdem der defekte Lichtwellenleiter instandgesetzt wurde, soll eine möglichst synchrone Umschaltung auf das Betriebslichtwellenleiterpaar erfolgen. Um dies zu erreichen, wird ein spezielles Schaltkommando genutzt, mit dessen Hilfe das optische Schaltsystem auf einer Seite in eine Art Wartestellung gebracht wird. Nach einer zwangsweisen Umschaltung auf der anderen Seite erfolgt dann eine quasisynchrone Umschaltung auf der Warteseite.

Für den Fall, dass mehrere Lichtwellenleiter unterbrochen werden, erfolgt die Umschaltung nach vorher festgelegten Prioritäten bzw. anderweitig definierten Kriterien, wie beispielsweise Zeitfenster.

Die Erfindung beschreibt ein Verfahren, mit dessen Hilfe eine 1:n Ersatzschaltung realisiert werden kann, ohne Verwendung von Overhead oder Zusatzkanälen.
Das Verfahren funktioniert gemäß folgender Grundprinzipien:
**■** Bei Detektion eines Betriebssignalausfalls werden sowohl die Empfangs- als auch die Senderichtung ersatzgeschaltet. Dadurch wird bei einem Fehler in nur einer Richtung auch in der Gegenrichtung ein Fehler provoziert. Dies hat zur Folge, dass stets an beiden Enden Fehler detektiert werden und jeweils eine Ersatzschaltung durchgeführt wird.
**■** Um länger andauernde Fehlverschaltungen bei konkurrierenden Mehrfachfehlern zu unterbinden, wird grundsätzlich das Betriebsdatensignal ersatzgeschaltet, welches zuerst ausgefallen ist.
**■** Quasi-gleichzeitige Mehrfachfehler können bewirken, dass das eine Ende den einen Ausfall und das andere Ende den anderen Ausfall als ersten erachtet. Quasi-gleichzeitige Mehrfachfehler haben fast immer eine gemeinsame Fehlerursache. Durch die Einführung einer Fehlerpersistenzprüfung im Sekundenbereich können quasi-gleichzeitige Fehler als solche erkannt werden. In diesem Fall schalten die beiden Enden nicht das Betriebsdatensignal ersatz, für das sie zuerst den Fehler detektiert haben, sondern das Betriebsdatensignal mit der niedrigeren Kanalnummer.
■ Ausfälle von Betriebsdatensignalen mit Ursache ausserhalb des 1:n Ersatzschaltesystems können vom Fehler detektierenden Ende nicht von solchen unterschieden werden, deren Ursache innerhalb des Ersatzschaltesystems liegt. Sofern die Ersatzdatenverbindung nicht bereits durch ein anderes Betriebsdatensignal belegt ist, wird ersatzgeschaltet. Das hat keine signifikanten negativen Auswirkungen, weil das Netzmanagementsystem durch seine globale Sicht die Fehlerursache lokalisieren kann und durch entsprechende Schaltbefehle an die optischen Schalteinrichtungen OXC1 und OXC2 das unnötigerweise ersatzgeschaltete Betriebsdatensignal auf die zugehörige Betriebsdatenverbindung zurückschalten kann. Die Ersatzdatenverbindung wird bei Fehlern von außerhalb somit nur für kurze Zeit belegt.
**■** Das Netzmanagementsystem kann mittels seiner globalen Sicht feststellen, wann nach einem Ausfall der Betriebsdatenverbindung selbige wieder funktionstüchtig ist. Um ein quasi-synchrones Zurückschalten zu ermöglichen, kann das Netzmanagementsystem nicht einfach entsprechende Schaltbefehle an die beiden optischen Schalteinrichtungen OXC1 und OXC2 schicken. Die Befehle würden typischerweise aufgrund des langsamen Datennetzes nicht gleichzeitig ankommen. Unterbrechungen des Betriebsdatensignals im Sekundenbereich wären die Folge. Das Netzmanagementsystem schickt statt dessen zuerst an einen der beiden optischen Schalteinrichtungen OXC den Befehl, sich auf das Zurückschalten vorzubereiten. D.h. die optische Schalteinrichtung OXC soll sofort auf die Betriebsdatenverbindung zurückschalten, sobald sie keinen Fehler mehr detektiert. An der anderen optischen Schalteinrichtung OXC schickt das Netzmanagementsystem den Befehl zurückzuschalten. Dieser Mechanismus bewirkt, dass die beiden Enden quasi-synchron zurückschalten.
**■** Beide optischen Schalteinrichtungen OXC führen einen kontinuierlichen Plausibilitätstest bezüglich des aktuellen Fehler- und Ersatzschaltezustandes des 1:n Ersatzschaltesystems durch. Bei Inkonsistenzen, die länger als die maximale Ersatzschaltedauer von 50 ms andauern, wird automatisch in den Ausgangszustand zurückgeschaltet und das Netzmanagementsystem informiert.

## Patentansprüche

1. Verfahren zum Schützen von mittels optischen Signalen übertragen Datensignalen, die über mindestens zwei beidseitig an optischen Schalteinrichtungen (OXC1, OXC2) angeschlossenen Betriebslichtwellenleiterpaaren (LWL1, LWL1', LWL2, LWL2', ..., LWLn, LWLn') bidirektional übertragen werden unter Verwendung wenigstens eines, ebenfalls an die Schalteinrichtungen angeschlossenen, Ersatzlichtwellenleiterpaares (LWLp, LWLp'), bei dem im Störungsfall eine Umschaltung vom jeweiligen Betriebslichtwellenleiterpaar auf das Ersatzlichtwellenleiterpaar mit Hilfe von in den optischen Schalteinrichtungen vorhandenen Überwachungs- und Steuereinrichtungen (OSF1, OSF2, ST1, ST2) durchgeführt wird,
**dadurch gekennzeichnet**
**dass** bei einer Störung wenigstens eines Lichtwellenleiters eines Betriebslichtwellenleiterpaares (LWL1, LWL1', LWL2, LWL2', ..., LWLn, LWLn') der empfangsseitig festgestellte optische Signalausfall eine sende- und empfangsseitige Umschaltung des Datensignals auf das Ersatzlichtwellenleiterpaar (LWLp, LWLp') auf der Empfangsseite auslöst und dass durch den **dadurch** bedingten optischen Signalausfall auf dem Betriebslichtwellenleiterpaar (LWL1, LWL1', LWL2, LWL2',..., LWLn, LWLn') in der gegenüberliegenden Seite eine gleichgeartete Umschaltung auf das Ersatzlichtwellenleiterpaar (LWLp, LWLp') erfolgt,
**dass** bei einem Ausfall mehrerer Betriebslichtwellenleiter (LWL1, LWL1' , LWL2, LWL2' , ... , LWLn, LWLn') nach einer festlegbaren Priorität auf das Ersatzlichtwellenleiterpaar (LWLp, LWLp') umgeschaltet wird.

2. Verfahren nach Anspruch 1
**dadurch gekennzeichnet,**
**dass** die Lichtwellenleiterpaare (LWL1, LWL1', LWL2, LWL2', ..., LWLn, LWLn', LWLp, LWLp') durch bidirektional genutzte Lichtwellenleiter realisiert sind.

3. Verfahren nach Anspruch 1 oder 2,
**dadurch gekennzeichnet,**
**dass** die Prioritätsvergabe abhängig vom zeitlichen Auftreten der Störungen in den jeweiligen Betriebslichtwellenleitern (LWL1, LWL1', LWL2, LWL2', ..., LWLn, LWLn') durchgeführt wird.

4. Verfahren nach einem der vorhergehenden Ansprüche,
**dadurch gekennzeichnet,**
**dass** die Umschaltung vom Ersatzlichtwellenleiterpaar (LWLp, LWLp') auf das wieder funktionsfähige Betriebslichtwellenleiterpaar (LWL1, LWL1' , LWL2, LWL2' , ..., LWLn, LWLn') durch einen zusätzlichen Bereitschaftsrückschaltebefehl erfolgt, der nach einer einseitigen Umschaltung eine quasisynchrone Umschaltung der gegenüberliegenden Seite bewirkt.

## Claims

1. Method for protecting data signals transmitted by means of optical signals, said data signals being bidirectionally transmitted over at least two operating optical fibre pairs (LWL1, LWL1', LWL2, LWL2',..., LWLn, LWLn') which are connected on both sides to optical switching facilities (OXC1, OXC2) by using at least one replacement optical fibre pair (LWLp, LWLp') which is likewise connected to the switching facilities, with which, in the event of an interference, a switchover from the respective operating optical fibre pair to the replacement optical fibre pair is carried out with the aid of monitoring and control facilities (OSF1, OSF2, ST1, ST2) present in the optical switching facilities,
**characterised in that**
in the event of an interference in the least one optical fibre of an operating optical fibre pair (LWL1, LWL1', LWL2, LWL2', ..., LWLn, LWLn') the optical signal failure determined on the receive side triggers a transmit and receive side switchover of the data signal to the replacement optical fibre pair (LWLp, LWLp') on the receive side and that the optical signal failure on the operating optical fibre pair (LWL1, LWL1', LWL2, LWL2',..., LWLn, LWLn') in the opposite side brings about a similar switchover to the replacement optical fibre (LWLp, LWLp')
a switchover to the replacement optical fibre pair (LWLp, LWLp') is carried out if a number of operating optical fibres (LWL1, LWL1', LWL2, LWL2', ..., LWLn, LWLn') fail according to a determinable priority.

2. Method according to claim 1,
**characterised in that**
the optical fibre pairs (LWL1, LWL1', LWL2, LWL2', ..., LWLn, LWLn', LWLp, LWLp') are realised by means of bidirectionally used optical fibres.

3. Method according to claim 1 or 2,
**characterised in that**
the priority allocation is carried out as a function of the temporal occurrence of interferences in the respective operating optical fibres (LWL1, LWL1', LWL2, LWL2', ..., LWLn, LWLn').

4. Method according to one of the preceding claims,
**characterised in that**
the switchover from the replacement optical fibre pair (LWLp, LWLP') to the operating optical fibre pair (LWL1, LWL1', LWL2, LWL2', ..., LWLn, LWLn') which is functional again is carried out by an additional stand-by downshift command, which, following a one-sided switchover, brings about a quasi-synchronous switchover of the opposite side.

## Revendications

1. Procédé pour la protection de signaux de données transmis au moyen de signaux optiques, qui sont transmis de façon bidirectionnelle par au moins deux paires de fibres optiques d'exploitation (LWL1, LWL1', LWL2, LWL2', ..., LWLn, LWLn') raccordées des deux côtés à des dispositifs de commutation optiques (OXC1, OXC2) avec l'utilisation d'au moins une paire de fibres optiques de remplacement (LWLp, LWLp') raccordées également aux dispositifs de commutation, dans lequel, en cas d'incident, une commutation de la paire de fibres optiques d'exploitation concernée sur la paire de fibres optiques de remplacement à l'aide de dispositifs de contrôle de commande (OSF1, OSF2, ST1, ST2) présents dans les dispositifs de commutation optiques est effectuée,
**caractérisé en ce que**,
dans le cas d'une défaillance d'au moins une fibre optique d'une paire de fibres optiques d'exploitation (LWL1, LWL1', LWL2, LWL2', ..., LWLn, LWLn'), la défaillance de signal optique constatée côté réception déclenche une commutation côté émission et côté réception du signal de données sur la paire de fibres optiques de remplacement (LWLp, LWLp') du côté réception et **en ce que**, du fait de la défaillance de signal optique ainsi occasionnée sur la paire de fibres optiques d'exploitation (LWL1, LWL1', LWL2, LWL2', ..., LWLn, LWLn') sur le côté opposé, on a une commutation du même type sur la paire de fibres optiques de remplacement (LWLp, LWLp'),
**en ce que**, dans le cas d'une défaillance de plusieurs fibres optiques d'exploitation (LWL1, LWL1', LWL2, LWL2', ..., LWLn, LWLn'), on commute sur la paire de fibres optiques de remplacement (LWLp, LWLp') selon une priorité définissable.

2. Procédé selon la revendication 1,
**caractérisé en ce que**
les paires de fibres optiques (LWL1, LWL1', LWL2, LWL2', ..., LWLn, LWLn', LWLp, LWLp') sont réalisées par des fibres optiques utilisées de façon bidirectionnelle.

3. Procédé selon la revendication 1 ou 2,
**caractérisé en ce que**
l'attribution de priorité est effectuée en fonction de l'apparition dans le temps des incidents dans les fibres optiques d'exploitation respectives (LWL1, LWL1', LWL2, LWL2', ..., LWLn, LWLn').

4. Procédé selon l'une quelconque des revendications précédentes,
**caractérisé en ce que**
le basculement de la paire de fibres optiques de remplacement (LWLp, LWLp') sur la paire de fibres optiques d'exploitation à nouveau fonctionnelle (LWL1, LWL1', LWL2, LWL2', ..., LWLn, LWLn') s'effectue par une instruction de commutation retour d'attente supplémentaire, qui entraine après une commutation unilatérale une commutation quasi synchrone du côté opposé.
